# EUROPEAN PATENT APPLICATION

(11) **EP 4 671 294 A1**
(43) Date of publication of application: **31.12.2025**
(21) Application number: 24915887.4
(22) Date of filing: 08.01.2024
(51) Int. Cl.: C08G 18/32, C08G 18/30, C08G 18/48, C08G 18/50, C08G 18/40, C08G 18/28, H01M 10/056, H01M 10/0565

(54) **POLYMER AND USE THEREOF**

(71) Applicant: Shenzhen Senior Technology Material Co., Ltd., Shenzhen, Guangdong 518106 (CN)
(72) Inventor: XIE, Yankun, Shenzhen, Guangdong 518106 (CN); WANG, Yanjie, Shenzhen, Guangdong 518106 (CN); LIN, Lujing, Shenzhen, Guangdong 518106 (CN); ZHANG, Xiaomin, Shenzhen, Guangdong 518106 (CN)
(74) Representative: J A Kemp LLP
(86) International application number: PCT/CN2024/071124
(87) International publication number: WO 2025/147805

(57) **Abstract**

The present application provides a polymer and use thereof. The polymer includes a first block represented by Formula 1 and a second block represented by Formula 2; R₁ is selected from a substituted or unsubstituted C1-C30 alkyl, a substituted or unsubstituted polyether group, a substituted or unsubstituted C1-C30 alkoxy, and a substituted or unsubstituted C6-C60 aryl; R₂ is selected from a substituted or unsubstituted polyether group, a substituted or unsubstituted C1-C30 alkyl, a substituted or unsubstituted C1-C30 alkoxy, a substituted or unsubstituted C6-C60 aryl and *-b1-S-S-b2-*; b1 and b2 are each independently selected from a substituted or unsubstituted C2-C15 chain alkyl or a substituted or unsubstituted C6-C60 aryl; and R₃ is an ionic liquid-containing group. The special molecular structure of the polymer enables the polymer to have excellent electrochemical performance and mechanical strength when applied to a composite electrolyte.

## Description

### TECHNICAL FIELD

Embodiments of the present application relate to a polymer and use thereof, belonging to the field of energy technology.

### BACKGROUND

Inorganic solid electrolytes have excellent ionic conductivity, high energy density, high mechanical strength and high safety, and are considered to have broad market application potential in batteries. However, inorganic solid electrolytes have disadvantages such as high material brittleness and poor flexibility, and they have complex preparation processes. In addition, the interface contact between inorganic solid electrolytes and electrodes of batteries is extremely poor, resulting in a high internal resistance of solid-state batteries.

In order to overcome the disadvantages of the inorganic solid composite electrolytes, existing technologies are preparing introduce organic-inorganic solid composite electrolytes by introducing polymer electrolytes into the inorganic solid electrolytes. Since polymers have excellent flexibility and processability, the obtained organic-inorganic solid composite electrolytes have relatively excellent flexibility and processability. However, polymer electrolytes have problems such as low mechanical strength, poor room-temperature ionic conductivity, and low ion migration number, which are likely to affect the mechanical performance and electrochemical performance of the organic-inorganic solid composite electrolytes. In addition, in the organic-inorganic solid composite electrolytes, there may be a problem of poor interface compatibility between the polymer electrolytes and the inorganic solid electrolytes, which affects the comprehensive performance of the organic-inorganic solid composite electrolytes.

### SUMMARY

The present application provides a polymer, and a special molecular structure of the polymer enables the polymer to have excellent electrochemical performance and mechanical strength when applied to a composite electrolyte.

The present application provides a composite electrolyte, which has excellent electrochemical performance and mechanical strength and may be widely applied to a battery to improve the comprehensive performance of the battery.

The present application provides a separator, which includes the above polymer or composite electrolyte, so when the separator is applied to a battery, the comprehensive performance of the battery can be improved.

The battery of the present application includes any one of the polymer, composite electrolyte and separator described above and thus has excellent comprehensive performance.

The present application provides a polymer, including a first block represented by Formula 1 and a second block represented by Formula 2; 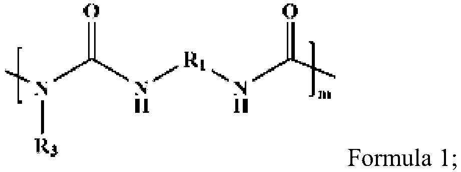 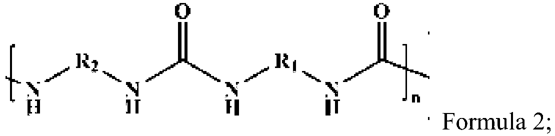
where R₁ is selected from a substituted or unsubstituted C1-C30 alkyl, a substituted or unsubstituted polyether group, a substituted or unsubstituted C1-C30 alkoxy, and a substituted or unsubstituted C6-C60 aryl;
R₂ is selected from a substituted or unsubstituted polyether group, a substituted or unsubstituted C1-C30 alkyl, a substituted or unsubstituted C1-C30 alkoxy, a substituted or unsubstituted C6-C60 aryl, and *-b1-S-S-b2-*; b1 and b2 are each independently selected from a substituted or unsubstituted C2-C15 chain alkyl or a substituted or unsubstituted C6-C60 aryl;
R₃ is an ionic liquid-containing group; and
m ≥ 1, n ≥ 1, and both m and n are integers.

In the polymer as described above, when the polymer includes a plurality of first blocks represented by Formula 1, at least one of the following conditions is met:
a) R₃ in the plurality of first blocks is selected from the same ionic liquid group; and
b) R₁ in the plurality of first blocks is selected from the same group.

In the polymer as described above, when the polymer includes a plurality of second blocks represented by Formula 2, R₁ in the plurality of second blocks is selected from the same group and R₂ in the plurality of second blocks is selected from the same group.

In the polymer as described above, R₃ is selected from one of an imidazole-based ionic liquid group, a pyridine-based ionic liquid group, a quaternary ammonium-based ionic liquid group or a quaternary phosphonium-based ionic liquid group.

In the polymer as described above, R₃ is selected from any one of the following groups: 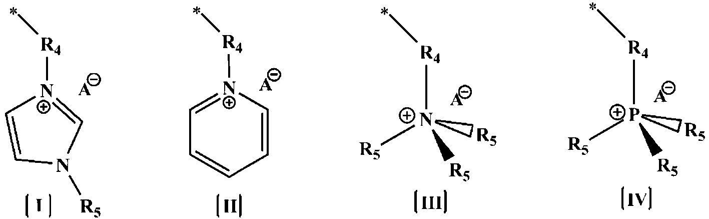 where R₄ is selected from a substituted or unsubstituted C1-C30 alkyl, and a substituted or unsubstituted C1-C30 alkoxy; R₅ is selected from a substituted or unsubstituted C1-C10 alkyl; and A is selected from BF₄⁻, PF₆⁻, TFSI⁻, OTf⁻, DCA⁻ or TOS⁻.

In the polymer as described above, at least one of the following conditions is met:
a) R₁ in the first block is a chain structure; and
b) R₂ in the second block includes a cyclic structure.

The polymer as described above is prepared by a method including the following steps:
subjecting an amino-based ionic liquid and a diisocyanate-based compound to a first reaction, to obtain a first intermediate compound; and
subjecting the first intermediate compound, a diamine-based compound and a diisocyanate-based compound to a second reaction, to obtain the polymer.

The present application provides a composite electrolyte including an inorganic solid electrolyte and the polymer as described above.

In the composite electrolyte as described above, based on a total mass of the composite electrolyte, a mass content of the polymer is 10% to 30%.

The composite electrolyte as described above further includes a lithium salt, and based on the total mass of the composite electrolyte, a mass content of the lithium salt is 1% to 10%.

The composite electrolyte as described above further includes a plastic crystal, and based on the total mass of the composite electrolyte, a mass content of the plastic crystal is 1% to 10%.

The present application provides a separator, including: a porous substrate; and the polymer as described above or the composite electrolyte as described above, disposed on at least part of a surface of the porous substrate and/or in at least part of pores of the porous substrate.

The present application provides a battery, including the polymer as described above;
or, including the composite electrolyte as described above;
or, including the separator as described above.

The polymer of the present application includes the structural formulas represented by Formula 1 and Formula 2. When the polymer is applied to a composite electrolyte (including an inorganic solid electrolyte and the polymer electrolyte), the electrochemical performance and mechanical performance of the composite electrolyte can be improved.

The composite electrolyte of the present application includes the polymer with the special molecular structure described above. The composite electrolyte has excellent electrochemical performance and mechanical strength and may be widely applied to a battery to improve the electrochemical performance of the battery and extend the service life of the battery.

The separator of the present application includes the polymer or composite electrolyte described above, so when the separator is applied to a battery, the electrochemical performance of the battery can be improved and the service life of the battery can be extended.

The battery of the present application includes any one of the polymer, composite electrolyte and separator described above, and thus has excellent electrochemical performance and a long service life.

### BRIEF DESCRIPTION OF DRAWINGS

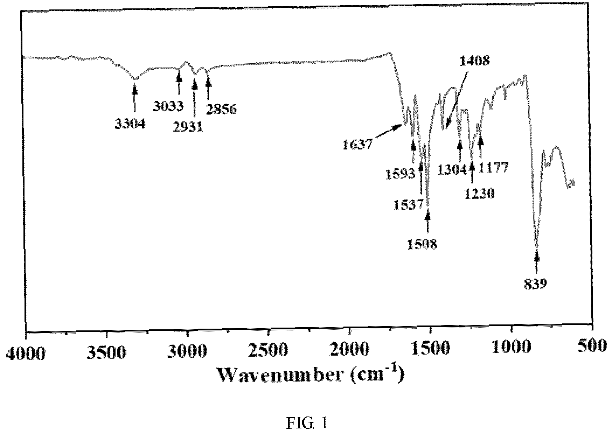

FIG. 1 is an infrared test graph of a polymer in Example 2 of the present application.

### DESCRIPTION OF EMBODIMENTS

In order to make the purpose, technical solutions and advantages of the embodiments of the present application more clear, the technical solutions in the embodiments of the present application will be clearly and completely described below in conjunction with the drawings in the embodiments of the present application. Obviously, the described embodiments are some rather than all of the embodiments of the present application. All other embodiments obtained by those of ordinary skill in the art without creative work based on the embodiments in the present application belong to the scope of protection of the present application.

The present application provides a polymer, including a first block represented by Formula 1 and a second block represented by Formula 2; 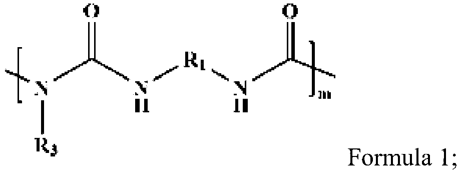 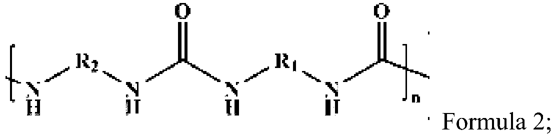
where R₁ is selected from a substituted or unsubstituted C1-C30 alkyl, a substituted or unsubstituted polyether group, a substituted or unsubstituted C1-C30 alkoxy, and a substituted or unsubstituted C6-C60 aryl;
R₂ is selected from a substituted or unsubstituted polyether group, a substituted or unsubstituted C1-C30 alkyl, a substituted or unsubstituted C1-C30 alkoxy, a substituted or unsubstituted C6-C60 aryl, and *-b1-S-S-b2-*; and b1 and b2 are each independently selected from a substituted or unsubstituted C2-C15 chain alkyl or a substituted or unsubstituted C6-C60 aryl;
R₃ is an ionic liquid-containing group; and
m ≥ 1, n ≥ 1.

The polymer of the present application includes the first block represented by Formula 1 and the second block represented by Formula 2. The present application does not limit the number of the first block and the number of the second block in the polymer. The number of the first block and the number of the second block may be the same, or may be different. The present application also does not limit the arrangement manner of the first block and the second block. The first block and the second block may be arranged in sequence (exemplarily, a structural formula of the polymer includes the first block, the first block, the second block, and the second block connected in sequence); the first block and the second block may be arranged alternately (exemplarily, the structural formula of the polymer includes the first block, the second block, the first block, and the second block connected in sequence); the first block and the second block may also be arranged irregularly (exemplarily, the structure of the polymer includes the first block, the second block, the first block, the first block, and the second block connected in sequence).

Specifically, R₁ is selected from a substituted or unsubstituted polyether group (for example, it may be a substituted chain polyether group, an unsubstituted chain polyether group, a substituted cyclic polyether group or an unsubstituted cyclic polyether group), a substituted or unsubstituted C1-C30 alkyl (for example, it may be an unsubstituted linear alkyl, an unsubstituted branched alkyl, an unsubstituted cycloalkyl, an substituted linear alkyl, a substituted branched alkyl or a substituted cycloalkyl), a substituted or unsubstituted C1-C30 alkoxy (for example, it may be a substituted chain alkoxy, an unsubstituted chain alkoxy, a substituted cyclic alkoxy, or an unsubstituted cyclic alkoxy), and a substituted or unsubstituted C6-C60 aryl (for example, it may be a substituted phenyl, a substituted biphenyl, an unsubstituted phenyl or an unsubstituted biphenyl);
R₂ is selected from a substituted or unsubstituted C1-C30 alkyl (for example, it may be an unsubstituted linear alkyl, an unsubstituted branched alkyl, an unsubstituted cycloalkyl, an substituted linear alkyl, a substituted branched alkyl or a substituted cycloalkyl), a substituted or unsubstituted C1-C30 alkoxy (for example, it may be a substituted branched alkoxy, a substituted linear alkoxy, a substituted cyclic alkoxy, an unsubstituted linear alkoxy, an unsubstituted branched alkoxy or an unsubstituted cyclic alkoxy), a substituted or unsubstituted polyether group (for example, it may be a substituted chain polyether group, an unsubstituted chain polyether group, a substituted cyclic polyether group or an unsubstituted cyclic polyether group), a substituted or unsubstituted C6-C60 aryl (for example, it may be a substituted phenyl, a substituted biphenyl, an unsubstituted phenyl or an unsubstituted biphenyl), and *-b1-S-S-b2-* (b1 and b2 are each independently selected from a substituted or unsubstituted C2-C15 chain alkyl or a substituted or unsubstituted aryl, * is a position connected with the main chain of Formula 1 (or Formula 2));
the present application does not particularly limit the substituents in R₁ and R₂, and the substituents may be substituents commonly used in the art, and exemplarily, the substituents may be selected from a substituted or unsubstituted C1-C30 alkyl, a substituted or unsubstituted C2-C30 alkenyl, a substituted or unsubstituted C3-C30 alkynyl, ester group, a substituted or unsubstituted C1-C30 alkoxy, a substituted or unsubstituted C6-C60 aryl, halogen and amino;
the ionic liquid group in R₃ refers to an organic group containing a cation and an anion;
m and n are positive integers.

The polymer of the present application may be used to compound with an inorganic solid electrolyte to prepare a composite electrolyte including a polymer electrolyte and the inorganic solid electrolyte. The ionic liquid group in the polymer of the present application has good ionic conductivity, which can realize the rapid transport of ions in the composite electrolyte. Moreover, the urea group (-NH-CO-NH-) in the polymer has a strong polar effect, which can enable a strong physical interaction between the polymer electrolyte and the inorganic solid electrolyte, so that the inorganic solid electrolyte and the polymer electrolyte can be closely combined, and the interface compatibility between the inorganic solid electrolyte and the polymer electrolyte is improved. At the same time, the polymer of the present application includes the first block containing the ionic liquid group and the second block containing the urea group, and thus is a polymer with a block-like structure, where the first block containing the ionic liquid group can make the transport efficiency of lithium ions in the polymer electrolyte higher, and the second block containing the urea group has an excellent interface interaction with the inorganic solid electrolyte, and thus can reduce the internal interface impedance of the composite electrolyte, and improve the transport of lithium ions in the composite electrolyte. Thus, the electrochemical performance of the composite electrolyte is improved.

Moreover, the urea groups in the polymer have strong hydrogen bond interactions, and the composite electrolyte including the polymer has an extensive dynamic hydrogen bond structure network. The dynamic hydrogen bond network is continuously opened and formed during the deformation process, which can dissipate the energy generated by the deformation of the material, endowing the composite electrolyte with good mechanical flexibility. It is worth mentioning that the ionic liquid group in the polymer also has excellent flame-retardant performance, which can significantly improve the flame-retardant performance of the composite electrolyte, thereby improving the safety performance of the battery.

It can be understood that in the polymer of the present application, R₁ in the first block and R₁ in the second block may be the same, or may be different; and when the polymer includes a plurality of first blocks (m ≥ 2), R₁ in the plurality of first blocks may be the same, or may be different, and R₃ in the plurality of first blocks may be the same, or may be different; when the polymer includes a plurality of second blocks (n ≥ 2), R₁ in the plurality of second blocks may be the same, or may be different, and R₂ in the plurality of second blocks may be the same, or may be different.

In some embodiments of the present application, when the polymer includes a plurality of first blocks represented by Formula 1 (m ≥ 2), R₃ in the plurality of first blocks is selected from the same ionic liquid group. Selecting the same ionic liquid group is beneficial to improving the uniformity of ion conduction, so that the polymer has high ionic conductivity.

In some embodiments of the present application, when the polymer includes a plurality of first blocks represented by Formula 1 (m ≥ 2), R₁ in the plurality of first blocks is selected from the same group, and selecting the same group is beneficial to improving the regularity of the polymer, thereby further improving the uniformity and stability of ion conduction.

In some embodiments of the present application, when the polymer includes a plurality of second blocks represented by Formula 2 (n ≥ 2), R₁ in the plurality of second blocks is selected from the same group and R₂ is selected from the same group. Selecting the same group is beneficial to improving the structural uniformity of the second blocks, thereby facilitating improving the uniform distribution of the interaction sites among the polymer molecular chains and improving the physical performance of the polymer.

In some embodiments of the present application, R₃ is selected from one of an imidazole-based ionic liquid group, a pyridine-based ionic liquid group, a quaternary ammonium-based ionic liquid group or a quaternary phosphonium-based ionic liquid group.

In the present application, the polymer including the above ionic liquid group can have more excellent room temperature ionic conductivity and flame-retardant performance when applied to the composite electrolyte, and the ionic liquid used to form the above ionic liquid group is easy to be obtained and relatively cheap, which helps to save production costs.

Further, R₃ is selected from any one of the following groups: 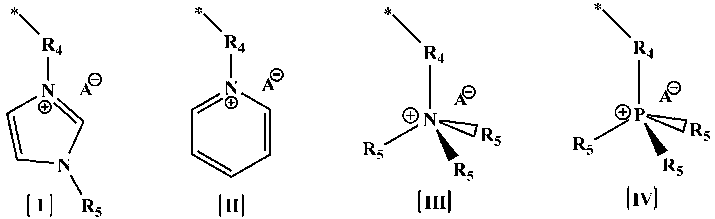 where R₄ is selected from a substituted or unsubstituted C1-C30 alkyl or a substituted or unsubstituted C1-C30 alkoxy; R₅ is selected from a substituted or unsubstituted C1-C10 alkyl; and A is selected from BF₄⁻, PF₆⁻, TFSI⁻, OTf⁻, DCA⁻ or TOS⁻.

Specifically, * in the above structural formula refers to a position connected to the main chain represented by Formula 1.

R₄ is selected from a substituted or unsubstituted C1-C30 alkyl (for example, it may be a substituted linear alkyl, a substituted branched alkyl, a substituted cycloalkyl, an unsubstituted branched alkyl, an unsubstituted linear alkyl or an unsubstituted cycloalkyl), a substituted or unsubstituted C1-C30 alkoxy (for example, it may be a substituted linear alkoxy, a substituted cyclic alkoxy, a substituted branched alkoxy, an unsubstituted cyclic alkoxy, an unsubstituted linear alkoxy or an unsubstituted branched alkoxy); and R₅ is selected from a substituted or unsubstituted C1-C10 alkyl (for example, it may be a substituted linear alkyl, a substituted branched alkyl, a substituted cycloalkyl, an unsubstituted branched alkyl, an unsubstituted linear alkyl or an unsubstituted cycloalkyl).

The formation of the anionic group may be obtained by dissociation of a corresponding salt. Exemplarily, the tetrafluoroborate ion is obtained by dissociation of lithium tetrafluoroborate, and the hexafluorophosphate ion is obtained by dissociation of lithium hexafluorophosphate. The structures of the anionic groups of the present application are as follows:

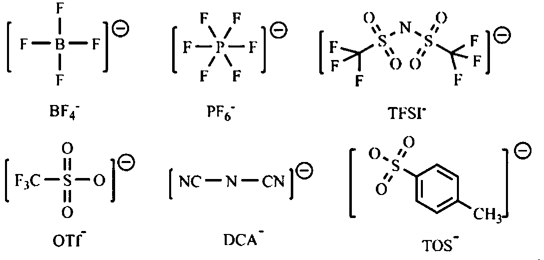

The present application does not particularly limit the substituents in R₄ and R₅, and the substituents may be substituents commonly used in the art. Exemplarily, the substituents may be selected from at least one of a substituted or unsubstituted C1-C30 alkyl, a substituted or unsubstituted C2-C30 alkenyl, a substituted or unsubstituted C3-C30 alkynyl, ester group, a substituted or unsubstituted C1-C30 alkoxy, a substituted or unsubstituted C6-C60 aryl and halogen.

When R₃ is selected from the above structural formula, the production cost can be reduced while further improving the electrochemical performance and flame-retardant performance of the battery.

In some embodiments of the present application, R₁ in the first block is a chain structure. That is, R₁ in the first block is selected from a substituted or unsubstituted chain polyether group, a substituted or unsubstituted chain C1-C30 alkyl, and a substituted or unsubstituted chain C1-C30 alkoxy.

When R₁ in the first block is a chain structure, the transport performance of lithium ions between ionic liquid structures can be regulated to improve the lithium ion transport efficiency of the composite electrolyte.

In some embodiments of the present application, R₂ in the second block includes a cyclic structure. That is, R₂ in the second block is selected from a substituted or unsubstituted cyclic polyether group, a substituted or unsubstituted C6-C60 aryl, *-b1-S-S-b2-* (b1 and b2 are each independently selected from a substituted or unsubstituted C6-C60 aryl), a substituted or unsubstituted cyclic C3-C30 alkyl, and a substituted or unsubstituted cyclic C3-C30 alkoxy.

When R₂ in the second block includes a cyclic structure, it is beneficial to improving the rigidity and thermal performance of the polymer, thereby improving the mechanical performance and heat resistance of the composite electrolyte and extending the service life of the battery.

Especially, when R₁ in the first block of the polymer is a chain structure and R₂ in the second block includes a cyclic structure, the structure formula of the polymer is both rigidity and flexibility, which is not only beneficial to improving the physical performance of the second block, but also can increase the flexibility of the molecular chain structure of the second block, so that the molecular chain morphology is adjusted when the polymer interacts with the inorganic solid electrolyte, which is beneficial to increasing the interaction sites between the second block and the inorganic solid electrolyte particles, thereby improving the interface bonding performance between the polymer and the inorganic solid electrolyte, and being beneficial to reducing the internal interface impedance of the composite solid electrolyte, so that the polymer electrolyte has both excellent mechanical performance and lithium ion transport performance, thereby improving the electrochemical performance of the battery and extending the service life of the battery.

The present application does not particularly limit the raw materials and methods for preparing the polymer. The raw materials and preparation methods corresponding to the purpose may be freely selected as long as the polymer can meet the range of the above various features.

In some embodiments of the present application, the polymer is prepared by a method including the following steps:
subjecting an amino-based ionic liquid and a diisocyanate-based compound to a first reaction, to obtain a first intermediate compound; and
subjecting the first intermediate compound, a diamine-based compound and a diisocyanate-based compound to a second reaction, to obtain the polymer.

Specifically, the preparation method of the polymer includes: subjecting the amino-based ionic liquid and the diisocyanate-based compound to a first reaction, and in the first reaction, an amino group in the amino-based ionic liquid reacts with an isocyanate group in the diisocyanate-based compound to form the first intermediate compound including the first block, where the R₃ group in the first block is derived from the amino-based ionic liquid, and the R₁ group in the first block is derived from the diisocyanate-based compound;
subjecting the first intermediate compound, the diamine-based compound and the diisocyanate-based compound to a second reaction, and in the second reaction, the amino group in the diamine-based compound reacts with the isocyanate group in the diisocyanate-based compound to form a second block including a urea group, and the second block is interconnected with the first intermediate compound to form a polymer including the first block and the second block, where the R₁ group in the second block is derived from the diisocyanate-based compound, and the R₂ group in the second block is derived from the diamine-based compound.

The present application does not make particular limitation on the amino-based ionic liquid, which may be an amino-based ionic liquid commonly used in the art. The amino-based ionic liquid may be commercially purchased or prepared in a laboratory.

The present application does not particularly limit the diisocyanate-based compound. The diisocyanate-based compound may be a compound containing two isocyanate groups commonly used in the art. Exemplarily, the diisocyanate-based compound may be selected from at least one of polyethylene glycol diisocyanate, isophorone diisocyanate, hexamethylene diisocyanate, diphenylmethane 4,4'-diisocyanate, p-phenylene diisocyanate, 1,4-diisocyanatobutane, m-phenylene diisocyanate, 1,12-diisocyanatotridecane, toluene diisocyanate-polypropylene glycol copolymer, 1,6-diisocyanato-2,2,4-trimethylhexane, 2,6-diisocyanatotoluene, 6-(4-isocyanatophenoxy)-hexanoic acid 2-[6-(4-isocyanatophenoxy)-hexanoyloxy]-ethyl ester, m-phenylenedimethyl diisocyanat, toluene-2,4-diisocyanate and 4,4'-methylenedicyclohexyl diisocyanate.

The present application does not particularly limit the diamine-based compound, which may be a compound containing two amino groups in the art. Exemplarily, the diamine-based compound may be selected from at least one of polyetheramine, cystamine, bis(3-aminopropyl) disulfide, 4,4'-diaminodicyclohexylmethane, hexamethylenediamine, 4,7,10-trioxo-1,13-tridecanediamine, 4,4'-diaminodiphenylmethane, p-phenylenediamine, polyethylene glycol diamine, 4,9-dioxa-1,12-dodecanediamine, 4,4'-diaminodiphenyl disulfide, bis(6-aminohexyl) disulfide and O,O'-bis(2-aminopropyl) polypropylene glycol-block-polyethylene glycol-block-polypropylene glycol.

The present application does not limit the order of addition of the raw materials in the second reaction. It may be that the first intermediate compound, the diamine-based compound and the diisocyanate-based compound are mixed to undergo the second reaction. Alternatively, it may be that the diamine-based compound and the diisocyanate-based compound are mixed first and then added to the first intermediate compound, to undergo the second reaction occurs. Alternatively, it may be that the first intermediate compound and the diamine-based compound are mixed first and then react with the diisocyanate-based compound to undergo the second reaction.

The present application does not particularly limit the specific parameters of the first reaction, as long as the amino group in the amino-based ionic liquid may react with the isocyanate group in the diisocyanate-based compound. In some embodiments, in the first reaction, the temperature is 0°C to10°C, and the time is 5 min to 180 min.

The present application does not particularly limit the specific parameters of the second reaction, as long as the amino group in the diamine-based compound may react with the isocyanate group in the diisocyanate-based compound to connect the second block with the first block. In some embodiments, in the second reaction, the temperature is 0°C to 10°C, and the time is 5 min to 300 min.

In some embodiments, the polymer may be prepared by a method including the following steps: reacting an amino-based ionic liquid with a diisocyanate-based compound at 0°C to 10°C for 5 min to 180 min to obtain a first intermediate compound; then gradually adding a diamine-based compound, and then gradually adding the diisocyanate-based compound, to react at 0°C to 10°C for 5 min to 300 min.

The present application does not specifically limit the addition amount of the raw materials, which may be selected according to actual needs. In some embodiments, in the first reaction, an excess of the diisocyanate-based compound can enable a complete chemical reaction of the amino group in the amino-based ionic liquid, thereby forming the first block structure, and the excess of the diisocyanate-based compound may obtain the first intermediate compound containing reactive isocyanate groups at both ends, so that the first intermediate compound can directly undergo the second reaction. In the second reaction, by adjusting the molar ratio of the first intermediate compound, the diamine-based compound and the diisocyanate-based compound to make a molar content of the isocyanate group close to a molar content of the amino group, the change of the molecular weight distribution of the polymer can be better controlled, avoiding a significant effect on the polymerization degree of the polymer due to excessive isocyanate groups or excessive amino groups, which would otherwise cause an excessive change of the molecular weight distribution of the polymer and thus affect the physical and chemical performance of the polyurea polymer.

Furthermore, in some embodiments, in the first reaction, the molar ratio of the amino-based ionic liquid to the diisocyanate-based compound is 1:(2.0-2.1); and in the second reaction, the molar ratio of the first intermediate compound, the diamine-based compound and the diisocyanate-based compound is 1:(1.5-1.7):(0.5-0.6), that is, the molar ratio of the isocyanate group to the amino group in the second reaction is approximately 1:(1.0-1.1).

The present application prepares the polymer through the above preparation method, not only the polymer with excellent comprehensive performance can be obtained, but also the preparation method is simple to operate and is suitable for large-scale production.

A second aspect of the present application provides a composite electrolyte, which includes an inorganic solid electrolyte and the polymer of the first aspect of the present application.

The present application does not particularly limit the inorganic solid electrolyte. The inorganic solid electrolyte may be an inorganic solid electrolyte commonly used in the art. Exemplarily, the inorganic solid electrolyte may be selected from at least one of lithium lanthanum zirconium oxide (LLZO), lithium lanthanum zirconium tantalum oxide (LLZTO), lithium aluminum titanium phosphate (LATP) and lithium aluminum germanium phosphate (LAGP).

In the present application, the polymer may form a polymer electrolyte, so that the composite electrolyte includes the inorganic solid electrolyte and the polymer electrolyte.

In a composite electrolyte membrane prepared by the prior art, the polymer of the polymer electrolyte is usually polyacrylonitrile (PAN), polyethylene oxide (PEO), polyvinylidene fluoride (PVDF) and polymethyl methacrylate (PMMA), etc. The ionic conductivity and mechanical strength of the composite electrolyte are low, and the interface compatibility between the polymer electrolyte and the inorganic solid electrolyte is poor, which may cause obvious interface impedance inside the composite electrolyte, affecting the transport of lithium ions between the polymer electrolyte and the inorganic solid electrolyte, thereby reducing the electrochemical performance of the composite electrolyte. Compared with the prior art, the composite electrolyte of the present application includes a polymer with a special structure in the first aspect and an inorganic solid electrolyte, has excellent ionic conductivity and mechanical strength, and the interface compatibility between the polymer electrolyte and the inorganic solid electrolyte in the composite electrolyte is excellent, so the composite electrolyte can significantly improve the electrochemical performance of the battery and extend the service life of the battery.

Further, in some embodiments of the present application, when, based on a total mass of the composite electrolyte, a mass content of the polymer is 10% to 30% and a mass content of the inorganic solid electrolyte is greater than 0% and less than 90%, the role of the polymer can be fully utilized while conserving the polymer, thereby increasing the total mass of the composite electrolyte.

In some embodiments of the present application, the composite electrolyte further includes a lithium salt; and a mass content of the lithium salt is 1% to 10% based on the total mass of the composite electrolyte.

When the composite electrolyte further includes the lithium salt, the lithium salt may be better compounded with the polymer to form the polymer electrolyte, thereby obtaining the composite electrolyte including the polymer electrolyte and the inorganic solid electrolyte. The composite electrolyte has more excellent ion mobility and ion conductivity. Especially, when the mass content of the lithium salt in the composite electrolyte is 1% to 10%, the lithium salt can be better interacted with the polymer while conserving the lithium salt, thereby improving the ion mobility and ion conductivity of the composite electrolyte.

In some embodiments, when the mass content of the polymer in the composite electrolyte is 10% to 30%, the mass content of the lithium salt is 1% to 10%, and the mass content of the inorganic solid electrolyte is 60% to 89%, the composite electrolyte has a more excellent comprehensive performance.

The present application does not specifically limit the lithium salt, which may be a lithium salt commonly used in the art. Exemplarily, the lithium salt may be selected from at least one of lithium bis(trifluoromethylsulfonyl) imide (LiTFSI), lithium difluorooxalatoborate (LiDFOB), lithium hexafluorophosphate (LiPF₆), lithium tetrafluoroborate (LiBF₄), lithium bis(oxalatoborate) (LiBOB) and lithium bis(difluorosulfonyl) imide (LiFSI).

It can be understood that in the present application the lithium salt may be added directly during the preparation of the composite electrolyte, or the lithium salt may be added in the form of electrolyte solution during the preparation of the battery.

In some embodiments of the present application, the composite electrolyte further includes a plastic crystal, and based on the total mass of the composite electrolyte, a mass content of the plastic crystal is 1% to 10%.

The present application does not particularly limit the plastic crystal, and the plastic crystal may be a plastic crystal commonly used in the art. Exemplarily, the plastic crystal may be butanedinitrile.

The present application utilizes the good physical interaction between butanedinitrile and the electron-rich components (such as an oxygen element, an ester group, etc.) in the composite electrolyte to improve the dynamic bond network structure in the composite electrolyte, so that the composite electrolyte has better physical and mechanical strength; and the use of butanedinitrile can further enhance the interfacial bonding between the organic electrolyte and the inorganic solid electrolyte, reduce the internal impedance of the composite solid electrolyte, and improve the transport of the lithium ions at the interface; at the same time, the strong polar interaction of butanedinitrile and polyurea can produce good adsorption on the anionic groups, reduce the migration of the anionic groups in the composite electrolyte, and reduce the transport resistance of lithium ions in the composite electrolyte, so as to achieve rapid transport. Furthermore, when the mass content of the plastic crystal in the composite electrolyte is 1% to 10%, the plastic crystal can interact better with the lithium salt and/or the inorganic solid electrolyte while conserving the plastic crystal, thereby improving the comprehensive performance of the composite electrolyte. In some embodiments, when the mass content of the polymer in the composite electrolyte is 10% to 30%, the mass content of the inorganic solid electrolyte is 50% to 88%, the mass content of the plastic crystal is 1% to 10%, and the mass content of the lithium salt is 1% to 10%, the composite electrolyte has more excellent comprehensive performance.

The present application does not particularly limit the preparation method of the composite electrolyte, and those skilled in the art can freely select a preparation method corresponding to the purpose.

In the present application, the composite electrolyte may be obtained by forming a self-supporting film, such as by casting the raw material system on a release film, curing the film and then peeling it off, or by extruding the raw material system into a film.

In some embodiments, the composite electrolyte may be prepared by a method including the following steps: adding an inorganic solid electrolyte to a first solvent to obtain a first mixed solution; adding a polymer to a second solvent to obtain a second mixed solution; thoroughly mixing the first mixed solution and the second mixed solution to obtain a third mixed solution; casting the third mixed solution as a raw material system onto a surface of a release film, and then removing the first solvent and the second solvent, and separating it from the release film to obtain the composite electrolyte.

The present application does not particularly limit the first and second solvents, which may be selected from commonly used solvents, such as N-methylpyrrolidone (NMP), acetone, methanol, ethanol, etc.

In some embodiments, the method for preparing the composite electrolyte may further include the following step: adding a lithium salt to the third mixed solution obtained by thoroughly mixing the first mixed solution and the second mixed solution, and stirring sufficiently to obtain a uniformly mixed raw material system.

In some embodiments, the method for preparing the composite electrolyte may further include the following step: adding a lithium salt and a plastic crystal to the third mixed solution obtained by thoroughly mixing the first mixed solution and the second mixed solution, and stirring sufficiently to obtain a uniformly mixed raw material system.

A third aspect of the present application provides a separator, including: a porous substrate; and the polymer of the first aspect or the composite electrolyte of the second aspect, disposed on at least part of a surface of the porous substrate and/or in at least part of pores of the porous substrate.

It can be understood that in the separator of the present application, the polymer may be disposed on part or all of the surface of the porous substrate, or in part or all of the pores of the porous substrate; or the composite electrolyte can be disposed on part or all of the surface of the porous substrate, or in part or all of the pores of the porous substrate.

The present application does not limit the specific arrangement method. The commonly used arrangement method in the art can be used to arrange the polymer or composite electrolyte on at least part of the surface of the porous substrate and/or in at least part of the pores of the porous substrate to form a separator.

In some embodiments, the separator can be obtained by coating the raw material system of the polymer or composite electrolyte on a porous substrate and curing it, or by hot pressing or rolling a self-filming polymer or composite electrolyte with a porous substrate, where the porous substrate can be any conventional porous substrate for battery separators. For example, the porous substrate can be a film or fabric substrate formed by any of the following polymers: the polymer may be selected from at least one of polyethylene terephthalate, polybutylene terephthalate, polymethyl methacrylate, polyacetal, polyamide, polycarbonate, polyimide, polyetheretherketone, polyethersulfone, polyphenylene oxide, polyphenylene sulfide, polyethylene naphthalene, polyvinylidene fluoride, polyethylene oxide, polyacrylonitrile, tetrafluoropropylene copolymer, and hexafluoropropylene copolymer; it may also be selected from at least one of copolymers, homopolymers, and derivatives thereof of propylene, 1-butene, pentene, 1-hexene, 4-methyl-1-pentene, 1-octene, and 1-decene.

In some embodiments, it can be prepared by a method including the following steps: adding an inorganic solid electrolyte to a first solvent to obtain a first mixed solution; adding a polymer to a second solvent to obtain a second mixed solution; thoroughly mixing the first mixed solution and the second mixed solution to obtain a third mixed solution; applying the third mixed solution as a raw material system to at least part of the surface of the porous substrate, and then heating and drying to remove the first solvent and the second solvent to obtain the separator.

The present application does not particularly limit the first solvent and the second solvent, which may be each selected from common solvents, such as N-methylpyrrolidone (NMP), acetone, methanol, ethanol, etc.

In some embodiments, the preparation process of the separator may further include the following step: adding a lithium salt to the third mixed solution after the first mixed solution and the second mixed solution are thoroughly mixed, and stirring sufficiently to obtain a uniformly mixed raw material system.

In some embodiments, the preparation process of the separator may further include the following step: adding a lithium salt and a plastic crystal to the third mixed solution after the first mixed solution and the second mixed solution are thoroughly mixed, and stirring sufficiently to obtain a uniformly mixed raw material system.

In some embodiments, the preparation process of the separator may further include the following step: subjecting the separator obtained after drying to a roll pressing treatment, so that the bonding between the polymer or the composite electrolyte and the porous substrate is tighter.

The separator of the present application, due to including the polymer or composite electrolyte described above, can improve the electrochemical performance of the battery and broaden the application scenarios of the battery when applied to the battery.

A fourth aspect of the present application provides a battery, including the polymer in the first aspect;
or, including the composite electrolyte in the second aspect;
or, including the separator in the third aspect.

It can be understood that the battery of the present application further includes a positive electrode sheet, a negative electrode sheet and an outer package.

In the present application, the positive electrode sheet, the composite electrolyte (or the separator) and the negative electrode sheet may be stacked to obtain an electrode assembly, and the electrode assembly may be placed in the outer package and sealed to obtain the battery.

The battery of the present application, due to including the above composite electrolyte, has excellent electrochemical performance, excellent user experience, and is suitable for wide promotion and application.

The technical solutions of the present application are described in detail below through specific examples.

The sources of some components in the examples and comparative examples are described as follows. Components for which specific experimental steps or conditions are not specified in the examples or comparative examples may be obtained by following operations or conditions of the conventional experimental steps described in the prior art in this field.

### (1) Amino-based ionic liquid:

1-aminopropyl-3-methylimidazole bis(trifluoromethanesulfonyl) imine (CAS:1013932-26-7);
1-aminoethyl-3-methylimidazole tetrafluoroborate (CAS: 897965-53-6);
the above amino-based ionic liquids were all purchased from Qingdao Aolike New Material Technology Co., Ltd.

### (2) Diisocyanate-based compound:

hexamethylene diisocyanate (CAS: 822-06-0);
diphenylmethane 4,4'-diisocyanate (CAS: 101-68-8);
1,12-diisocyanatotridecane (CAS: 13879-35-1);
The above diisocyanate-based compounds were all purchased from Shanghai Aladdin Biochemical Technology Co., Ltd.

### (3) Diamine-based compound:

Polyetheramine D230 (CAS: 9046-10-0);
2,2'-dithiodiethylamine (CAS: 56-17-7);
4,4'-diaminodicyclohexylmethane (CAS: 1761-71-3)
the above diamine-based compounds were all purchased from Shanghai Macklin Biochemical Technology Co., Ltd.

### (4) Plastic crystal material:

butanedinitrile (CAS: 110-61-2);
the above plastic crystal material was purchased from Shanghai Macklin Biochemical Technology Co., Ltd.

### Example 1

The battery of this example was prepared by a method including the following steps.

### 1) Preparation of polymer

An amino-based ionic liquid and a diisocyanate-based compound were subjected to a first reaction, to obtain a first intermediate compound; a diamine-based compound was added gradually, and then the diisocyanate-based compound was added gradually to perform a second reaction to obtain the polymer;
where the amino-based ionic liquid is 1-aminopropyl-3-methylimidazole bis(trifluoromethanesulfonyl) imine, the diisocyanate-based compound is hexamethylene diisocyanate, and the diamine-based compound is 4,4'-diaminodiphenylmethane;
in the first reaction, a molar ratio of the amino-based ionic liquid to the diisocyanate-based compound was 1:1.05, a reaction temperature was 5°C, and a reaction time was 120 min;
in the second reaction, a molar ratio of the first intermediate product, the diisocyanate-based compound and the diamine-based compound was 1:1.5:0.5. A reaction temperature was 5°C, and a reaction time was 240 min.

### 2) Preparation of composite electrolyte

An inorganic solid electrolyte was dispersed in NMP solvent to obtain a first dispersion solution;
the polymer in step 1) was dissolved in NMP solvent to obtain a first solution;
the first dispersion solution and the first solution were thoroughly mixed to obtain a second solution;
butanedinitrile and a lithium salt were then added into the second solution, stirred for 1 hour to obtain a uniformly mixed raw material system;
the raw material system was coated to at least part of a surface of a porous substrate, and then heated and dried to remove the NMP solvent to obtain a composite electrolyte;
where the inorganic solid electrolyte is LATP, the lithium salt is lithium hexafluorophosphate, and the porous substrate is a PET non-woven porous membrane;
in the composite electrolyte, a mass content of the inorganic solid electrolyte is 60%, a mass content of the lithium salt is 5%, a mass content of the plastic crystal is 5%, and a mass content of the polymer is 30%.

### 3) Preparation of battery

A positive electrode sheet, the composite electrolyte and a negative electrode sheet were stacked to obtain an electrode assembly, and the electrode assembly was placed in an aluminum-plastic film and sealed to obtain a battery;
where the positive electrode sheet includes an aluminum foil and a positive electrode active layer disposed on a surface of the aluminum foil, the positive electrode active layer includes lithium cobaltate, a conductive agent Super P, and a binder PVDF, and a mass ratio of lithium cobaltate, the conductive agent, and the binder is 96:2:2; and
the negative electrode sheet includes a copper foil and a negative electrode active layer disposed on a surface of the copper foil, the negative electrode active layer includes silicon-doped graphite, a conductive agent Super P, and a binder PAA, and a mass ratio of the silicon-doped graphite, the conductive agent, and the binder is 95:2:3.

### Example 2

A preparation method of a battery of this example is substantially the same as that of Example 1, with the difference being as follows:
1) preparation of polymer
   the diisocyanate-based compound is diphenylmethane-4,4'-diisocyanate.

### Example 3

A preparation method of a battery of this example is substantially the same as that of Example 1, with the difference being as follows:
1) preparation of polymer
   the diamine-based compound is polyetheramine D230.

### Example 4

A preparation method of a battery of this example is substantially the same as that of Example 1, with the difference being as follows:
1) preparation of polymer
   the amino-based ionic liquid is 1-aminoethyl-3-methylimidazole tetrafluoroborate, the diisocyanate-based compound is 1,12-diisocyanatotridecane, and the diamine-based compound is 2,2'-dithiodiethylamine.

### Example 5

A preparation method of a battery of this example is substantially the same as that of Example 1, with the difference being as follows:
1) preparation of polymer
   in the first reaction, the amino-based ionic liquid is 1-aminoethyl-3-methylimidazole tetrafluoroborate, and the diisocyanate-based compound is 1,12-diisocyanatotridecane; and
   in the second reaction, the diamine-based compound is polyetheramine D230, and the diisocyanate-based compound is diphenylmethane-4,4'-diisocyanate.

### Example 6

A preparation method of a battery of this example is substantially the same as that of Example 1, with the difference being as follows:
1) preparation of polymer
   in the first reaction, the diisocyanate-based compound is hexamethylene diisocyanate and 1,12-diisocyanatotridecane (a molar ratio of hexamethylene diisocyanate to 1,12-diisocyanatotridecane is 1:1); and
   in the second reaction, the diamine-based compound is 4,4'-diaminodicyclohexylmethane, and the diisocyanate-based compound is diphenylmethane-4,4'-diisocyanate.

### Example 7

A preparation method of a battery of this example is substantially the same as that of Example 1, with the difference being as follows:
2) preparation of composite electrolyte
no butanedinitrile is added;
in the composite electrolyte, the mass content of the inorganic solid electrolyte is 65%, the mass content of the lithium salt is 5%, and the mass content of the polymer is 30%.

### Comparative Example 1

A preparation method of a battery of this comparative example is substantially the same as that of Example 1, with the difference being as follows:
1) preparation of polymer
   the amino-based ionic liquid, the diisocyanate-based compound and the diamine-based compound are added into a reactor simultaneously to prepare the polymer by a one-pot method;
   where the molar ratio of the amino-based ionic liquid, the diisocyanate-based compound and the diamine-based compound is 1:2.1:1.1;
   the reaction temperature is 5°C and the reaction time is 240 min.

### Comparative Example 2

A preparation method of a battery of this comparative example is substantially the same as that of Comparative Example 1, with the difference being as follows:
1) preparation of polymer
   the diisocyanate-based compound is diphenylmethane-4,4'-diisocyanate.

### Comparative Example 3

A preparation method of a battery of this comparative example is substantially the same as that of Example 1, with the difference being as follows:
1) Preparation of polymer
   no amino-based ionic liquid is included, the diisocyanate-based compound and the diamine-based compound are directly reacted to obtain the polymer;
   where the molar ratio of the diisocyanate-based compound to the diamine-based compound is 1:1.1, the reaction temperature is 5°C, and the reaction time is 240 min.

### Comparative Example 4

A preparation method of a battery of this comparative example is substantially the same as that of Comparative Example 1, with the difference being as follows:
2) preparation of composite electrolyte
no plastic crystal material is added; and
in the composite electrolyte, the mass content of the inorganic solid electrolyte is 65%, the mass content of the lithium salt is 5%, and the mass content of the polymer is 30%.

### Performance Tests

The following performance tests were performed on the polymers, composite electrolytes and batteries in the examples and comparative examples, and the test results are shown in Table 1.

### 1. Infrared test

FIG. 1 is an infrared test graph of the polymer in Example 2 of the present application. As shown in FIG. 1, in the infrared test curve of the polymer of Example 2 of the present application, the absorption peaks at 3304 cm⁻¹ and 1637 cm⁻¹ are the stretching vibration absorptions of N-H bond and C=O bond in the urea group, respectively; the absorption peaks at 1508 cm⁻¹ and 1593 cm⁻¹ come from the vibration absorption of the benzene ring; the absorption peak at 3033 cm⁻¹ is the stretching vibration absorption of C-H bond on the benzene ring, and the strong absorption peak at 839 cm⁻¹ comes from the out-of-plane bending vibration absorption of the CH bond in the benzene ring, where the benzene ring is 1,4 para-substituted; the absorption peak at 1537 cm⁻¹ comes from the vibration absorption of the skeleton of the imidazole ring, and the peak at 1177 cm⁻¹ is the stretching vibration absorption peak of the imidazole ring; the absorption peaks at 2856 cm⁻¹ and 2931 cm⁻¹ are the stretching vibration absorption peaks of methyl and methylene; the absorption peak at 1408 cm⁻¹ comes from the vibration absorption of the tertiary amine bond, and the absorption peak at 1230 cm⁻¹ comes from the stretching vibration absorption of the C-N bond; and the absorption peak at 1304 cm⁻¹ is the vibration absorption of the C-N bond in the aromatic amine. This proves that Example 2 of the present application successfully prepared the polymer having the structural formulas represented by Formula 1 and Formula 2.

### 2. Room temperature ionic conductivity

It was tested by using the method specified in "Test Method for Ionic Conductivity of Power Battery Thin Films" (the industry standard NB/T 10827-2021).

### 3. Cycle performance of battery

It was tested according to the method specified in the national standard GB/T31486-2015 "Electrical Performance Requirements and Test Methods for Traction Battery of Electric Vehicle".

### 4. Limiting oxygen index

It was tested according to the methods specified in GB/T2406.1-2008 "Plastics-Determination of burning behaviour by oxygen index - Part 1: Guidance" and GB/T2406.2-2009 "Plastics-Determination of burning behaviour by oxygen index-Part 2: Ambient-temperature test".

### 5. Internal impedance

The internal impedance of the battery was represented according to the electrochemical impedance test methods in TSPSTS 019-2021 "Performance Requirements and Test Methods for Solid-state Electrolytes for Solid-State Lithium Batteries - Inorganic Oxide Solid-state Electrolytes" and TSPSTS 020-2021 "Performance Requirements and Test Methods for Solid-state Electrolytes for Solid-State Lithium Batteries - Polymer and Composite Solid-state Electrolytes".

### 6. Tensile strength

The tensile strength of the composite electrolytes was tested according to the standard test method of ASTM D638-14 "Standard Test Method for Tensile Properties of Plastics".

**Table 1**

| | Room temperature ionic conductivity /(mS/cm) | Capacity retention rate of battery (1C/1C, 300 cycles) | Limiting oxygen index | Internal impedance/Ω | Tensile strength/MPa |
|---|---|---|---|---|---|
| Example 1 | 0.32 | 96.6% | 32% | 326 | 13.1 |
| Example 2 | 0.23 | 93.9% | 35% | 388 | 14.2 |
| Example 3 | 0.29 | 95.3% | 30% | 345 | 10.5 |
| Example 4 | 0.26 | 96.1% | 30% | 350 | 11.4 |
| Example 5 | 0.29 | 95.9% | 31% | 331 | 12.0 |
| Example 6 | 0.27 | 95.1% | 30% | 348 | 12.6 |
| Example 7 | 0.21 | 93.1% | 30% | 367 | 12.1 |
| Comparative Example 1 | 0.19 | 91.1% | 30% | 421 | 11.7 |
| Comparative Example 2 | 0.13 | 90.2% | 31% | 435 | 11.3 |
| Comparative Example 3 | 0.10 | 88.6% | 20% | 477 | 11.9 |
| Comparative Example 4 | 0.12 | 89.6% | 29% | 460 | 11.5 |

As can be seen from Table 1, the composite electrolytes prepared from the polymer of the examples of the present application have excellent room temperature ionic conductivity, limiting oxygen index and tensile strength. When the composite electrolytes are applied to a battery, they can improve the capacity retention rate of the battery, reduce the internal impedance of the battery, and enable the battery to have excellent comprehensive performance.

Furthermore, according to Example 1 and Comparative Example 1, it can be seen that the ionic conductivity of the composite electrolyte (Example 1) prepared by the polymer including the first block represented by Formula 1 and the second block represented by Formula 2 in the present application is better than the ionic conductivity of the composite electrolyte (Comparative Example 1) prepared by the polymer with a disordered structure, and when applied to a battery, the battery in Example 1 has a more excellent cycle capacity retention rate and lower internal impedance, indicating that a polymer with higher regularity and a better-defined block structure helps to improve the comprehensive performance of the composite electrolyte, thereby improving the comprehensive performance of the battery.

Finally, it should be noted that the above examples are only used to illustrate the technical solutions of the present application, but not to limit them. Although the present application is illustrated in detail with reference to the above examples, those of ordinary skill in the art should understand that they may still make modifications to the technical solutions recorded in the above examples or make equivalent substitutions to some or all of the technical features therein; and these modifications or substitutions do not make the essence of the corresponding technical solutions depart from the scope of the technical solutions of the embodiments of the present application.

## Claims

1. A polymer, comprising a first block represented by Formula 1 and a second block represented by Formula 2; 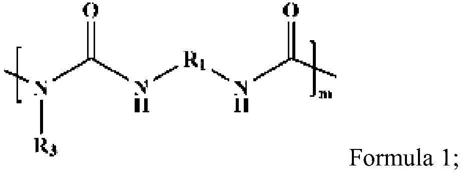 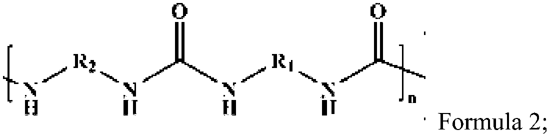
wherein R₁ is selected from a substituted or unsubstituted C1-C30 alkyl, a substituted or unsubstituted polyether group, a substituted or unsubstituted C1-C30 alkoxy, and a substituted or unsubstituted C6-C60 aryl;
R₂ is selected from a substituted or unsubstituted polyether group, a substituted or unsubstituted C1-C30 alkyl, a substituted or unsubstituted C1-C30 alkoxy, a substituted or unsubstituted C6-C60 aryl, and *-b1-S-S-b2-*; b1 and b2 are each independently selected from a substituted or unsubstituted C2-C15 chain alkyl or a substituted or unsubstituted C6-C60 aryl; and R₃ is an ionic liquid-containing group; and
m ≥ 1, n ≥ 1, and both m and n are integers.

2. The polymer according to claim 1, wherein when the polymer comprises a plurality of first blocks represented by Formula 1, at least one of the following conditions is met:
a) R₃ in the plurality of first blocks is selected from the same ionic liquid group; and
b) R₁ in the plurality of first blocks is selected from the same group.

3. The polymer according to claim 1, wherein when the polymer comprises a plurality of second blocks represented by Formula 2, R₁ in the plurality of second blocks is selected from the same group and R₂ in the plurality of second blocks is selected from the same group.

4. The polymer according to any one of claims 1 to 3, wherein R₃ is selected from one of an imidazole-based ionic liquid group, a pyridine-based ionic liquid group, a quaternary ammonium-based ionic liquid group or a quaternary phosphonium-based ionic liquid group.

5. The polymer according to claim 4, wherein R₃ is selected from any one of the following groups: 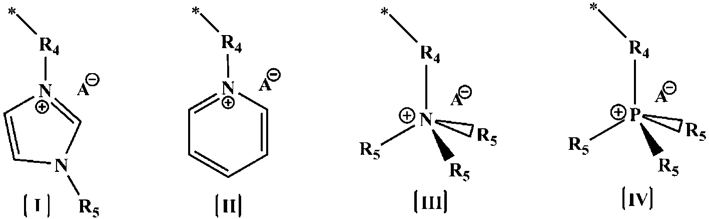 wherein R₄ is selected from a substituted or unsubstituted C1-C30 alkyl, or a substituted or unsubstituted C1-C30 alkoxy; R₅ is selected from a substituted or unsubstituted C1-C10 alkyl; and A is selected from BF₄⁻, PF₆⁻, TFSI⁻, OTf, DCA⁻ or TOS⁻.

6. The polymer according to any one of claims 1 to 5, wherein at least one of the following conditions is met:
a) R₁ in the first block is a chain structure; and
b) R₂ in the second block comprises a cyclic structure.

7. The polymer according to any one of claims 1 to 6, wherein the polymer is prepared by a method comprising the following steps:
subjecting an amino-based ionic liquid and a diisocyanate-based compound to a first reaction, to obtain a first intermediate compound; and
subjecting the first intermediate compound, a diamine-based compound and a diisocyanate-based compound to a second reaction, to obtain the polymer.

8. A composite electrolyte, comprising an inorganic solid electrolyte and the polymer according to any one of claims 1 to 7.

9. The composite electrolyte according to claim 8, wherein based on a total mass of the composite electrolyte, a mass content of the polymer is 10% to 30%, and a mass content of the inorganic solid electrolyte is greater than 0% and less than 90%.

10. The composite electrolyte according to claim 8 or 9, further comprising a lithium salt, wherein based on a total mass of the composite electrolyte, a mass content of the lithium salt is 1% to 10%.

11. The composite electrolyte according to claim 10, further comprising a plastic crystal, wherein based on the total mass of the composite electrolyte, a mass content of the plastic crystal is 1% to 10%.

12. A separator, comprising: a porous substrate; and the polymer according to any one of claims 1 to 7 or the composite electrolyte according to any one of claims 8 to 11, disposed on at least part of a surface of the porous substrate and/or in at least part of pores of the porous substrate.

13. A battery, comprising the polymer according to any one of claims 1 to 7; or, comprising the composite electrolyte according to any one of claims 8 to 11; or, comprising the separator according to claim 12.
